# EUROPÄISCHE PATENTSCHRIFT

(11) **EP 2 116 450 B1**
(45) Veröffentlichungstag und Bekanntmachung des Hinweises auf die Patenterteilung: **06.07.2011**
(21) Anmeldenummer: 08103909.1
(22) Anmeldetag: 09.05.2008
(51) Int. Cl.: B62D 25/20, B62D 29/04, B62D 33/04, B60P 7/08, B60P 7/14, B60P 3/20

(54) **Kofferaufbau mit einer Trennwand**
Box body with a separating wall
Structure de coffre dotée d'une paroi de séparation

(43) Veröffentlichungstag der Anmeldung: 11.11.2009
(73) Patentinhaber: Schmitz Cargobull AG, 48341 Altenberge (DE)
(72) Erfinder: Beelmann, Reinhard, Dipl.- Ing., 45721 Haltern am See (DE); Heßling, Alfons, 48683 Ahaus (DE); Küpers, Josef, 48703 Stadtlohn (DE)
(74) Vertreter: Cohausz & Florack

(56) Entgegenhaltungen:
- DE-A1-102006 018 179
- FR-A- 2 895 340
- US-A- 2 725 827
- US-A- 5 161 848

## Beschreibung

Die Erfindung betrifft einen Kofferaufbau eines Lastkraftwagens, Aufliegers und/oder Anhängers, mit einem Bodenpaneel, zwei Seitenwandpaneelen, einem Dachpaneel und wenigstens einer Trennwand zum Unterteilen des Kofferaufbaus.

Kofferaufbauten, die mit Hilfe einer Trennwand in Längsrichtung oder Querrichtung unterteilt werden können, sind seit geraumer Zeit am Markt verfügbar. Die Trennwände gestatten das Bereitstellen von zwei separaten, gegeneinander abgetrennten Bereichen innerhalb des Kofferaufbaus. Diese Bereiche können unterschiedlich temperiert oder klimatisiert werden, um darin etwa unterschiedlich temperatursensible Güter zu transportieren.

Bei den bekannten Kofferaufbauten sind die Trennwände verstellbar angeordnet, so dass die Trennwand zur Seite verschoben werden kann, wenn die Trennwand nicht oder in einer anderen Position benötigt wird.

Die FR2895340 offenbart Trennwände gemäß den Oberbegriff des Anspruchs 1.

Das Verstellen der Trennwand durch den Bediener, meist den Fahrer des Lastkraftwagens, ist jedoch verhältnismäßig aufwendig und zeitintensiv. Dies betrifft insbesondere die Verriegelung der Trennwand in der gewünschten Stellung. Um die Trennwand zu verriegeln, muss diese vom Fahrer entweder durch Umlegen einer entsprechenden Hebelmechanik zwischen dem Dachpaneel und dem Bodenpaneel verkeilt oder durch Betätigen einer entsprechenden Verriegelungsmechanik in entsprechenden Verriegelungshilfen verriegelt werden, die regelmäßig am Bodenpaneel vorgesehen sind. So kann es etwa erforderlich sein, an verschiedenen Stellen der Trennwand separate Verriegelungsstäbe herauszufahren, die in entsprechende Bohrungen im Bodenpaneel eingreifen. Dazu muss die Trennwand jedoch zunächst exakt Positioniert sein, was umständlich und langwierig sein kann.

Der vorliegenden Erfindung liegt daher die Aufgabe zu Grunde, den bekannten Kofferaufbau derart auszugestalten und weiterzubilden, dass die Verstellung und insbesondere die Positionierung der Trennwand einfacher und schneller erfolgen kann.

Diese Aufgabe ist bei einem Kofferaufbau nach dem Oberbegriff des Anspruchs 1 dadurch gelöst, dass die Trennwand in wenigstens einer quer zur Trennwand verlaufenden am Dachpaneel vorgesehenen Schiene geführt ist.

Die im Bodenpaneel eingelassene wenigstens eine Vertiefung vereinfacht das Positionieren der Trennwand, da die Trennwand mit ihrem unteren Rand lediglich bis zur Nut verschoben und in dieser Position beispielsweise mit dem wenigstens einen Vorsprung des unteren Rands in die Nut abgesenkt werden muss. Eine zusätzliche, separate Verriegelung mit dem Bodenpaneel ist für eine dauerhafte Fixierung der Trennwand nicht erforderlich. Um die Trennwand wieder zu entfernen, muss lediglich der untere Rand der Trennwand oder wenigstens ein am unteren Rand vorgesehener, zu der wenigstens einen Vertiefung korrespondierender Vorsprung aus der wenigstens einen Vertiefung herausgezogen werden.

Eine Vertiefung kann dabei etwa eine Bohrung oder dergleichen sein. Die Trennwand weist dann einen korrespondierenden Vorsprung am unteren Rand auf, der in die Vertiefung eindringen kann, um die Trennwand gegen ein insbesondere seitliches Verschieben zu sichern. Bevorzugt sind in diesem Zusammenhang eine Mehrzahl von Vertiefungen vorgesehen, die in wenigstens einer Reihe angeordnet sein können. Dann ist weiter vorzugsweise eine gleiche Anzahl von Vorsprüngen vorgesehen, so dass jeder Vorsprung in eine Vertiefung eingreift. Eine Reihe von Vertiefungen besteht dabei aus einer Mehrzahl von Vertiefungen, die entlang im Wesentlichen einer geraden Linie angeordnet sind.

Bei den Vorsprüngen des unteren Rands der Trennwand handelt es sich nicht um irgendwelche verstellbaren Verriegelungsmittel, die bei positionierter Trennwand separat bedient werden und so in Vertiefungen im Bodenpaneel herabgelassen werden können. Es handelt sich vielmehr jeweils um eine Art Fuß der Trennwand, der weder einziehbar noch ausziehbar ausgebildet ist. Der wenigstens eine Vorsprung ist dabei vorzugsweise in der Ebene der Trennwand und nicht seitlich dazu angeordnet.

Der wenigstens eine Vorsprung und die wenigstens eine korrespondierende Vertiefung ermöglichen das wenigstens teilweise Verschmelzen des Positionierens und des Arretierens, jedenfalls des unteren Rands der Trennwand, da kein separates in das Bodenpaneel eindringendes oder an dem Bodenpaneel angreifendes Verriegelungsmittel mehr erforderlich ist. Letztlich ist also auch dessen Betätigung nicht mehr erforderlich.

Nach einer ersten Ausgestaltung des Kofferaufbaus ist eine Nut zur Aufnahme des unteren Rands der Trennwand in das Bodenpaneel eingelassen. Mit anderen Worten befindet sich anstelle wenigstens einer lokalen Vertiefung bzw. wenigstens einer Reihe von Vertiefungen eine längliche Nut im Bodenpaneel des Kofferaufbaus eingelassen. Dementsprechend kann auch auf den entsprechenden Vorsprung oder die entsprechenden Vorsprünge des unteren Rands der Trennwand verzichtet werden. Es kann in die Nut nämlich bedarfsweise direkt der untere Rand der Trennwand eingeführt werden. Der untere Rand korrespondiert dabei derart mit der Nut im Bodenpaneel, dass ein Einführen des unteren Rands in die Nut möglich ist. Durch die Nut kann das Einführen der Trennwand und das genaue Positionieren der Trennwand vereinfacht werden. Zudem kann eine Nut einfacher, schneller und kostengünstiger im Bodenpaneel vorgesehen werden als eine Reihe von einzelnen Vertiefungen.

Alternativ oder zusätzlich kann die Trennwand bedarfsweise zum Unterteilen des Kofferaufbaus in Quererstreckung des Kofferaufbaus ausgebildet sein. Dabei ist dann vorzugsweise die Nut in Längserstreckung des Kofferaufbaus ausgerichtet. Alternativ kann aber auch bei einer Reihe von Vertiefungen vorgesehen sein, dass diese Reihe von Vertiefungen in Längserstreckung des Kofferaufbaus ausgerichtet ist. Bei der Trennwand handelt es sich also um eine sogenannte Längstrennwand, die eine Unterteilung in Querrichtung ermöglicht. Derartige Trennwände können wegen ihrer größeren Abmessungen nicht ohne weiteres reibschlüssig an den angrenzenden Paneelen des Kofferaufbaus fixiert werden, etwa weil das Verhältnis von Fläche zu Umfang der Trennwand mit zunehmender Länge der Trennwand geringer wird. Die Trennwand und damit bedarfsweise die Vertiefungen oder die wenigstens eine Nut können aber auch zur Unterteilung des Kofferaufbaus in Längsrichtung ausgebildet sein. Dabei erstreckt sich dann vorzugsweise im Bodenpaneel wenigstens eine Reihe von Vertiefungen oder wenigstens eine Nut in Längserstreckung des Kofferaufbaus.

Die Trennwand ist in wenigstens einer am Dachpaneel vorgesehenen Schiene geführt. Durch eine solche Führung kann die Trennwand im Kofferaufbau ohne großen Kraftaufwand verschoben werden, wodurch das Positionieren der Trennwand in Bezug auf die im Bodenpaneel vorgesehene Nut weiter vereinfacht wird. Insbesondere bei längeren Trennwänden können diese zweckmäßig in einer Mehrzahl von am Dachpaneel vorgesehenen Schienen geführt sein. Bei einer parallel zur Längserstreckung des Kofferaufbaus ausgerichteten Trennwand verläuft die Schiene oder verlaufen die Schienen vorzugsweise quer zum Kofferaufbau, während eine Schiene oder mehrere Schienen vorzugsweise längs zum Kofferaufbau verlaufen kann/können, wenn die Trennwand in Quererstreckung des Kofferaufbaus ausgerichtet ist.

Alternativ oder zusätzlich kann ein unbeabsichtigtes Lösen der Trennwand durch einen Verriegelungsmechanismus zur Fixierung der Trennwand am Dachpaneel verhindert werden. Dieser Verriegelungsmechanismus dient dabei vorzugsweise zum Etablieren einer formschlüssigen und/oder reibschlüssigen Verbindung zwischen der Trennwand und dem Dachpaneel. Die Trennwand ist dann sicher sowohl unten in der Nut als auch oben am Dachpaneel fixiert.

Um beispielsweise Beschädigungen am Dachpaneel durch das wiederholte Fixieren und Lösen der Trennwand zu verhindern, kann vorgesehen sein, dass der Verriegelungsmechanismus zum Fixieren der Trennwand am Dachpaneel in die wenigstens eine Schiene am Dachpaneel eingreift. Der Verriegelungsmechanismus kann dabei beispielsweise ein Verkeilen entsprechender Mittel, bei denen es sich um Nutensteine handeln kann, in der wenigstens einen Schiene bewirken. Neben den reibschlüssigen Verbindungen des Mittels in der wenigstens einen Schiene des Dachpaneels sind alternativ oder zusätzlich noch stoffschlüssige oder kraftschlüssige Verbindungen möglich. Da die wenigstens eine Schiene im Dachpaneel zum Verstellen der Trennwand ohnehin eine erhöhte Steifigkeit aufweisen muss, kann die wenigstens eine Schiene auch die durch die Verriegelung eingeleiteten Kräfte aufnehmen.

Bei einer weiteren Ausgestaltung des Kofferaufbaus ist die Trennwand in der wenigstens einen Schiene pendelnd aufgehängt. Dadurch kann die Trennwand schräggestellt werden, wobei der untere Rand der Trennwand bzw. der wenigstens eine am unteren Rand vorgesehene Vorsprung automatisch außer Eingriff mit der im Bodenpaneel eingelassenen Nut bzw. mit der wenigstens einen im Bodenpaneel eingelassenen Vertiefung gelangt, so dass die Trennwand insgesamt verschoben werden kann. Gleichzeitig erleichtert die pendelnde Aufhängung der Trennwand aber auch das Einführen der Trennwand in die wenigstens eine im Bodenpaneel eingelassene Vertiefung oder in die wenigstens eine im Bodenpaneel eingelassene Nut. Die Trennwand kann etwa in einer Ausrichtung schräg zur Vertikalen des Kofferaufbaus so lange verschoben werden, bis der wenigstens eine über das Bodenpaneel gleitende Vorsprung des unteren Rands der Trennwand in die wenigstens eine korrespondierende im Boden eingelassene Vertiefung eingreift. Im Falle einer Nut wird der untere über das Bodenpaneel gleitende Rand der Trennwand, so lange verschoben, bis er in die im Bodenpaneel eingelassene Nut eingreift. Nun muss die Trennwand nur noch in eine vertikale Stellung aufgerichtet werden, wobei der untere Rand der Trennwand oder der wenigstens eine Vorsprung des unteren Rands der Trennwand dann von alleine in die Nut oder die wenigstens eine Vertiefung hineingleitet.

Alternativ oder zusätzlich kann Die Trennwand eine Einrichtung zum vertikalen Verlängern/Verkürzen der Trennwand aufweisen. Eine entsprechende Einrichtung erleichtert beispielsweise das Entfernen der Trennwand aus der wenigstens einen im Bodenpaneel eingelassenen Vertiefung oder alternativ der wenigstens einen im Bodenpaneel eingelassenen Nut. Hierzu kann die Trennwand zunächst so weit verkürzt werden, dass die Vorsprünge des unteren Rands nicht mehr oder nur noch geringfügig in die wenigstens eine korrespondierende Vertiefung eingreifen oder dass alternativ der untere Rand der Trennwand als solcher nicht mehr oder nur noch geringfügig in die im Bodenpaneel eingelassene Nut eingreift.
In dieser Position lässt sich die Trennwand dann ohne weiteres verschieben. Zum Einbringen der Trennwand in die wenigstens eine im Bodenpaneel eingelassene Vertiefung oder Nut kann dagegen die zunächst verkürzte Trennwand so weit im Kofferaufbau verschoben werden, bis sie fluchtend zur wenigstens einen Reihe von Vertiefungen oder zur Nut ausgerichtet ist. In dieser Position wird die Trennwand dann durch die beschriebenen Einrichtungen verlängert, wodurch die Vorsprünge des unteren Randes oder der untere Rand der Trennwand selber in die wenigstens eine Vertiefung oder Nut eingeführt wird.

Das Verstellen der Trennwand durch Verlängern und Verkürzen der Trennwand kann selbstverständlich noch durch eine zusätzliche, pendelnde Aufhängung der Trennwand unterstützt werden.

Das Verkürzen der Trennwand entgegen der Schwerkraftrichtung kann für den Bediener dadurch vereinfacht werden, dass die vertikal verlängerte Trennwand wenigstens ein Federmittel aufweist, das eine Rückstellkraft auf die Trennwand ausübt, die das Verkürzen der Trennwand erleichtert und/oder unterstützt. Das Federmittel kann dabei vorzugsweise derart dimensioniert sein, dass die Trennwand nach einem Entriegeln selbsttätig aus einer verlängerten in eine verkürzte Stellung überführt wird. In diesem Fall muss der Bediener die Trennwand nicht selbständig anheben.

Im Zusammenhang mit einer Trennwand, die eine verkürzte und eine verlängerte Stellung einnehmen kann, ist es zweckmäßig, wenn die Trennwand in vertikaler Richtung teleskopierbar ausgebildet ist. Dies ermöglicht ein einfaches Verlängern und Verkürzen der Trennwand, ohne dass eine konstruktiv aufwendige Ausgestaltung der Trennwand erforderlich ist.

Damit der Kofferaufbau durch die Trennwand in unterschiedlichen Verhältnissen unterteilt werden kann, ist bei einer weiteren Ausgestaltung des Kofferaufbaus im Bodenpaneel wenigstens eine in Längserstreckung des Kofferaufbaus verlaufende zusätzliche Reihe von Vertiefungen oder alternativ wenigstens eine in Längserstreckung des Kofferaufbaus verlaufende zusätzliche Nut eingelassen. Es kann im Bodenpaneel also eine Mehrzahl von parallel verlaufenden Nuten eingelassen sein, die eine Unterteilung des Kofferaufbaus durch die Trennwand in vielen unterschiedlichen Verhältnissen ermöglichen. Bei einer anderen Ausgestaltung des Kofferaufbaus ist aus den gleichen Gründen statt wenigstens einer zusätzlichen Nut wenigstens eine Reihe von Vertiefungen im Bodenpaneel eingelassen, obwohl eine Nut gegenüber einer Reihe von Vertiefungen prinzipiell bevorzugt ist.

Damit der Kofferaufbau bedarfsweise unterteilt und bedarfsweise über seine gesamte Breite genutzt werden kann, kann wenigstens eine zusätzliche Nut, eine Vertiefung oder wenigstens eine zusätzliche Reihe von Vertiefungen in unmittelbarer Nähe zu einer der Seitenwandpaneele in das Bodenpaneel eingelassen sein. Soll die Trennwand eine Warteposition einnehmen, in der die Trennwand die Nutzung des Laderaums im Wesentlichen über die gesamte Breite des Kofferaufbaus ermöglicht, muss die Trennwand lediglich zu einem der Seitenwandpaneele bewegt und dort in die vorgesehene Nut, Vertiefung oder Reihe von Vertiefungen im Bodenpaneel eingelassen werden. Die wenigstens eine Nut oder Reihe von Vertiefungen erstreckt sich dann parallel zur Längserstreckung des Kofferaufbaus.

Alternativ kann die wenigstens eine zusätzliche Nut, eine Vertiefung oder wenigstens eine zusätzliche Reihe von Vertiefungen auch in unmittelbarer Nähe zu einem Stirnwandpaneel vorgesehen sein. Dann wird sich die wenigstens eine zusätzliche Nut oder die wenigstens eine zusätzliche Reihe von Vertiefungen quer zum Kofferaufbau erstrecken. Eine Trennwand zum Unterteilen des Kofferaufbaus in Längsrichtung kann so ebenfalls ohne weiteres eine Warteposition etwa angrenzend zum Stirnwandpaneel einnehmen und dort auf ihre weitere Verwendung warten.

Damit eine zufriedenstellende Energieeffizienz des Kofferaufbaus in einem gekühlten Betrieb erreicht wird, kann der untere Rand ein, bedarfsweise in die wenigstens eine Nut oder die wenigstens eine Vertiefung im Bodenpaneel eingreifendes unteres Dichtmittel aufweisen. Dieses Dichtmittel verhindert dann insbesondere einen Luftaustausch zwischen den beiden durch die Trennwand abgeteilten Bereichen des Kofferaufbaus. Der gleiche Effekt wird vorzugsweise auch durch ein am Dachpaneel anliegendes, sich entlang der Trennwand erstreckendes oberes Dichtmittel erreicht, das am oberen Teil der Trennwand angebracht ist.

Die Erfindung wird im Folgenden anhand einer lediglich ein Ausführungsbeispiel darstellenden Zeichnung näher erläutert. Die Zeichnung zeigt
- Fig. 1: einen Lastkraftwagen mit einem einen erfindungsgemäßen Kofferaufbau aufweisenden Auflieger,
- Fig. 2: den Kofferaufbau aus Fig. 1 in einer Schnittansicht längs zum Kofferaufbau,
- Fig. 3: den Kofferaufbau aus Fig. 1 in einer Schnittansicht quer zum Kofferaufbau,
- Fig. 4: ein Detail der Trennwand aus Fig. 3 im Bereich ihres oberen Endes,
- Fig. 5: ein Detail der Trennwand aus Fig. 3 im Bereich ihres unteren Endes,
- Fig. 6a: einen Verriegelungsmechanismus der Trennwand in einer schematischen Darstellung in einer gelösten Stellung und
- Fig. 6b: den Verriegelungsmechanismus aus Fig. 6a in einer verriegelten Stellung in schematischer Darstellung.

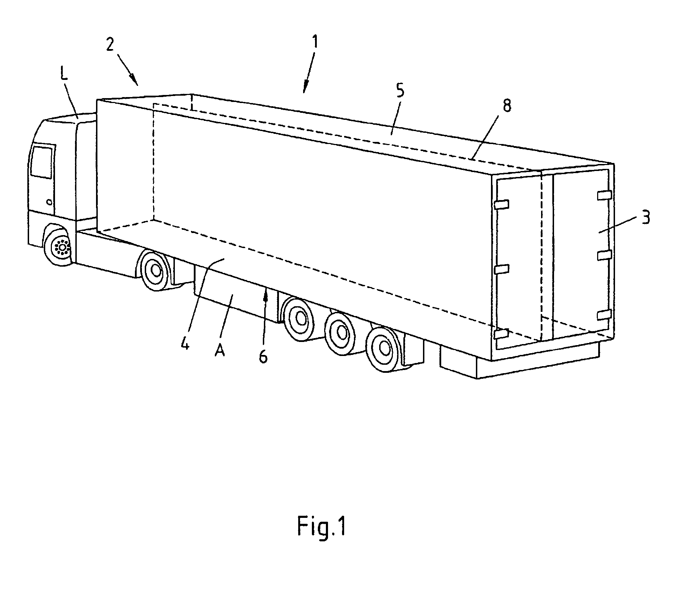

In Fig. 1 ist ein Lastkraftwagen L mit einem Auflieger A dargestellt, wobei der Auflieger A einen Kofferaufbau 1 trägt. Der Kofferaufbau 1 ist aus einer Stirnwand 2, einer Rückwand 3, zwei Seitenwandpaneelen 4, einem Dachpaneel 5 und einem Bodenpaneel 6 aufgebaut und bildet einen Innenraum zum Transport von Gütern. Alternativ zu dem in der Fig. 1 dargestellten Kofferaufbau 1 könnte der Kofferaufbau auch unmittelbar auf einem Lastkraftwagen oder einem Anhänger montiert sein. Dies wird sich lediglich auf die Abmessung des Kofferaufbaus auswirken, nicht aber auf dessen im Folgenden beschriebene Funktionalität.

Vorliegend wird für die Außenwände des Kofferaufbaus die Bezeichnung Paneel verwendet, weil die Wände von Kofferaufbauten vorzugsweise einen mehrschichtigen Aufbau aufweisen. Dabei ist insbesondere ein Sandwichaufbau bevorzugt, bei dem zwischen einer dünnen inneren Decklage und einer dünnen äußeren Decklage, letztlich der Innenhaut und der Außenhaut des Paneels, die vorzugsweise als Blechlage ausgebildet sind, eine Kernschicht aus einem geschäumten Kunststoffmaterial, wie Polyurethan, angeordnet ist. Prinzipiell sind aber auch beliebig anders aufgebaute Wand-, Dach-, Boden und Stirnwandelemente denkbar, bei denen es sich nicht wirklich um ein Paneel im eigentlichen Sinne handelt. Dennoch sind derartige Elemente von dem Begriff Paneel mit seiner hier zu Grunde liegenden Bedeutung mit umfasst.

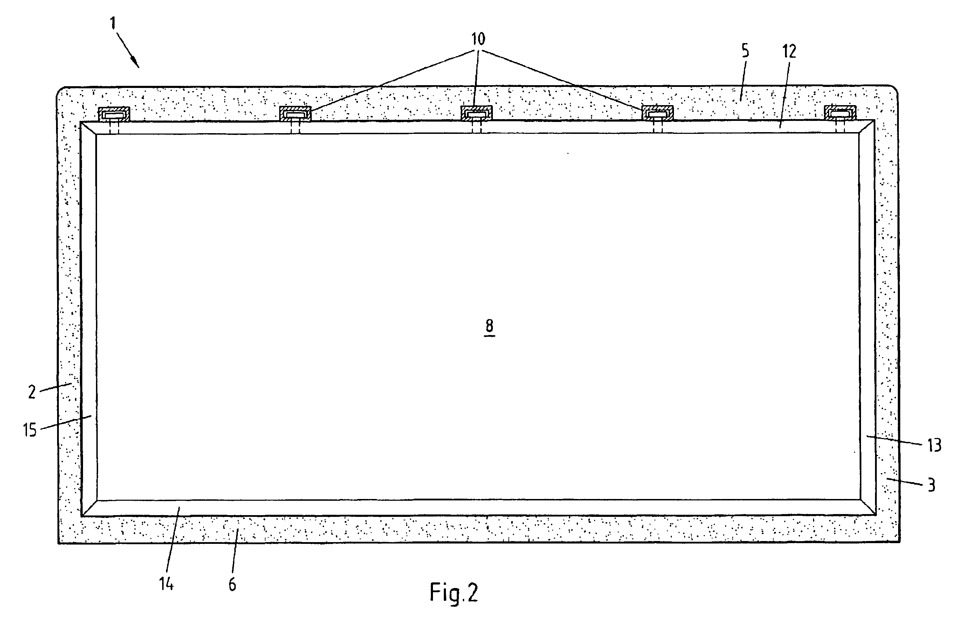

In der Fig. 2 ist in einem vertikalen Längsschnitt die Trennung des Kofferaufbaus 1 durch die Trennwand 8 in Längsrichtung sowie die Aufhängung der Trennwand 8 an einer Mehrzahl von quer zum Kofferaufbau verlaufenden Schienen 10 im Dachpaneel 5 dargestellt. Bei dem in der Fig. 2 dargestellten und insoweit bevorzugten Ausführungsbeispiel ist die Trennwand 8 umlaufend gegenüber dem Dachpaneel 5, dem Bodenpaneel 6, dem Stirnwandpaneel 2 und der Rückwand 3 abgedichtet. Alle umlaufend zur Trennwand 8 angeordneten Dichtmittel 12,13,14,15 verhindern einen ungehinderten Luftaustausch zwischen den beiden abgetrennten Bereichen 16,17 des Kofferaufbaus 1.

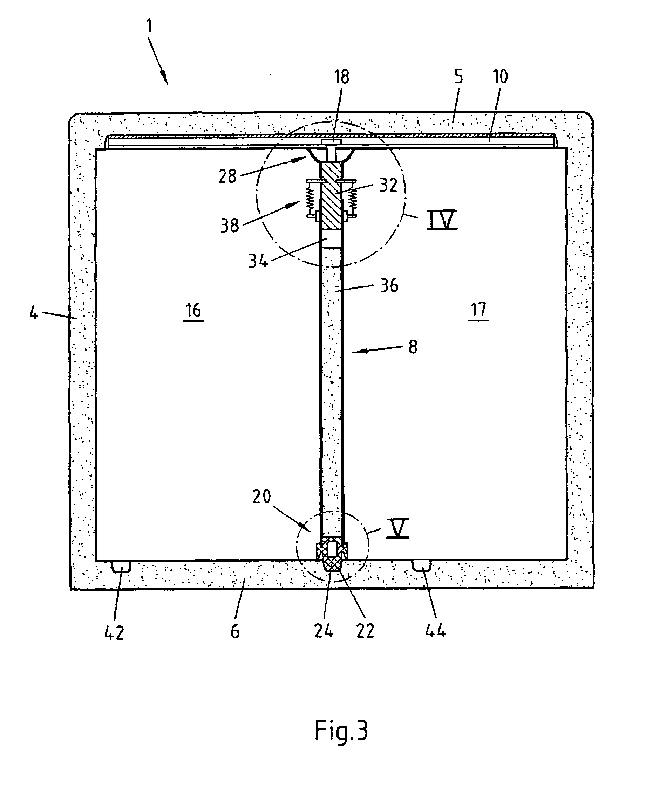

In der Fig. 3 ist ein vertikaler Schnitt quer zur Längsrichtung des Kofferaufbaus 1 dargestellt, wobei die Trennwand 8 zwei Bereiche 16,17 des Innenraums voneinander abtrennt. In den beiden voneinander abgetrennten Bereichen 16,17 des Innenraums können gleichzeitig Güter transportiert werden, die nicht unmittelbar angrenzend zueinander oder bei unterschiedlichen Temperaturen zu lagern sind. Der Kofferaufbau 1 kann dann ein Kühlaggregat aufweisen, das die unterschiedliche Temperierung der beiden Bereiche 16,17 des Innenraums ermöglicht.

Beim dargestellten Ausführungsbeispiel ist die Trennwand 8 im Kofferaufbau 1 auf ein sogenanntes Palettenmaß gesetzt. Dies bedeutet, dass auf jeder Seite der Trennwand 8 eine bestimmte Anzahl Paletten passgenau nebeneinander eingebracht werden kann. Auf diese Weise kann der Innenraum des Kofferaufbaus 1 effektiv ausgenutzt werden. Die in der Fig. 3 dargestellte mittige Anordnung der Trennwand 8 im Kofferaufbau 1 ist bevorzugt aber keinesfalls zwingend.

Quer zur Längserstreckung des Kofferaufbaus 1 verlaufen im Dachpaneel 5 in Längsrichtung voneinander beabstandete Schienen 10, in denen die Trennwand 8 geführt ist. Die Trennwand 8 ist mit einem Nutenstein 18 in der Schiene 10 eingehängt. Nicht im Einzelnen dargestellt ist, dass die Trennwand 8 in beiden Fällen in den Schienen 10 des Dachpaneels 5 pendelnd um eine Achse parallel zur Längserstreckung des Kofferaufbaus 1 aufgehängt ist.

Die Trennwand 8 ist im Wesentlichen vertikal ausgerichtet und mit ihrem unteren Rand 20 in eine Nut 22, die im Bodenpaneel 6 eingelassen ist, eingesteckt. An diesem unteren Rand 20 weist die Trennwand 6 ein unteres Dichtmittel 24 auf, das den Wärmetransport von einem der abgetrennten Bereiche 16 zum benachbarten Bereich 17 minimiert. Das untere Dichtmittel 24 kann eine aus Gummi gefertigte Wulst sein. Seitlich an dem unteren Dichtmittel 26 sind zwei Dichtlippen 26 vorgesehen, die auf der Ladefläche des Bodenpaneels 6 zu beiden Seiten der Nut 22 aufliegen, um so einen Luftaustausch zwischen den abgetrennten Bereichen 16,17 des Innenraums zu vermeiden.

Analog dazu ist bei der in der Fig. 3 dargestellten und insoweit bevorzugten Trennwand 8 gegenüber dem unteren Dichtmittel 24 ein oberes Dichtmittel 28 vorgesehen, das mit zwei separaten Dichtlippen 30 an das Dachpaneel 5 des Kofferaufbaus 1 anschließt. Das obere Dichtmittel 28 dient ebenfalls der Isolation der beiden abgetrennten Bereiche 16,17 des Kofferaufbaus 1 gegeneinander.

Das das obere Dichtmittel 28 tragende Kopfstück 32 der Trennwand 8 ist in einer Aussparung 34 im Grundkörper 36 der Trennwand 8 eingesetzt und darin vertikal verschieblich gelagert. Dies führt zu einer Teleskopierbarkeit der Trennwand 8 in vertikaler Richtung. Mit anderen Worten kann die Trennwand 8 also geringfügig auseinandergezogen, d.h. verlängert, und wieder ineinandergeschoben, d.h. verkürzt, werden. Ferner sind am Kopfstück 32 der Trennwand 8 Federmittel 38 vorgesehen, welche die beiden teleskopierenden Teile der Trennwand 8, also das Kopfstück 32 und den Grundkörper 36, miteinander verbinden. Dabei unterstützt die Federkraft der Federmittel 38 das Verkürzen der Trennwand 8 und erzeugt beim Verlängern der Trennwand 8 eine Rückstellkraft. In der in der Fig. 3 dargestellten, verlängerten Stellung der Trennwand 8 sind die Federmittel 38 ausgezogen und die Trennwand 8 wird durch einen entsprechenden Verriegelungsmechanismus 40 in dieser Stellung gehalten.

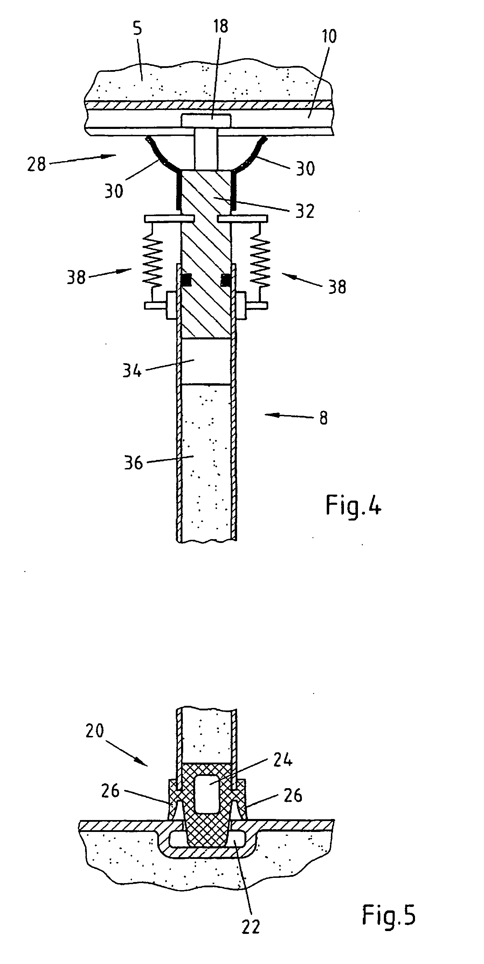

Der besseren Übersichtlichkeit halber sind in den Fig. 4 und 5 die oberen und unteren Enden der Trennwand in der Schnittansicht gemäß Fig. 3 in einer vergrößerten Detaildarstellung dargestellt.

Bei dem in der Fig. 3 dargestellten und insoweit bevorzugten Ausführungsbeispiel ist neben der etwa mittig angeordneten Nut 22 im Bodenpaneel 6 noch eine zusätzliche Nut 42 in unmittelbarer Nähe zum linken Seitenwandpaneel 4 im Bodenpaneel 6 eingelassen. Die Trennwand 8 kann also in der dargestellten Position entriegelt werden, wobei die Federmittel 38 zu einem zusammenziehen und damit Verkürzen der Trennwand entgegen und trotz der Schwerkraft führen. In dieser verkürzten Stellung gelangt der untere Rand 20 der Trennwand 8 aus dem Eingriff der Nut 22, so dass die Trennwand 8 in Querrichtung des Kofferaufbaus 1 verschoben werden kann, wobei die Trennwand 8 in den Schienen 10 des Dachpaneels 5 geführt bleibt. Ist die Trennwand 8 im Wesentlichen ganz nach links verschoben, gibt sie nahezu die gesamte Breite des Kofferaufbaus 1 zum Beladen frei. In dieser Position wird der zuvor gelöste Verriegelungsmechanismus 40 wiederum aktiviert, so dass die Trennwand 8 in eine verlängerte Stellung teleskopiert wird. Das Verlängern der Trennwand 8 bewirkt ein Eingreifen des unteren Randes 20 der Trennwand 8 in die in unmittelbarer Nähe zum linken Seitenwandpaneel 4 vorgesehene zusätzliche Nut 42. Durch die zusätzliche seitliche Nut 42 wird die Trennwand 8 letztlich sicher in einer Warteposition gehalten, bis sie wiederum zur gegenseitigen Abtrennung zweier Bereiche 16,17 des Kofferaufbaus 1 benötigt wird.

Eine weitere zusätzliche Nut 44 ist rechts von der Trennwand 8 in das Bodenpaneel 6 eingelassen. Mit dieser weiteren zusätzlichen Nut 44 kann der Kofferaufbau 1 in einem anderen Verhältnis, vorliegend etwa 2/3:1/3, unterteilt werden.

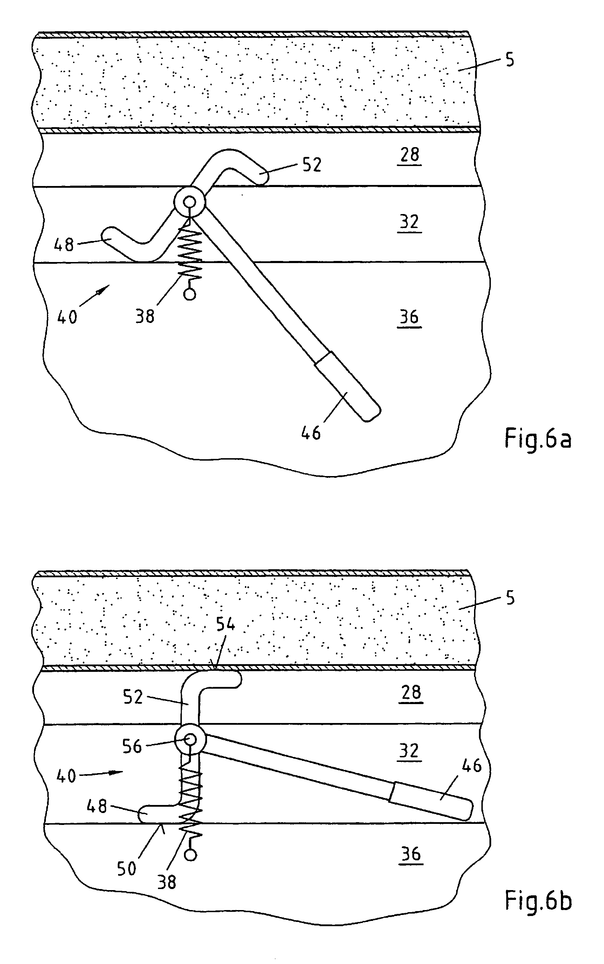

In den Fig. 6a und 6b ist ein Detail des Kofferaufbaus 1 im Übergangsbereich zwischen dem Dachpaneel 5 und der Trennwand 8 dargestellt. Das dargestellte Detail umfasst einen Verriegelungsmechanismus 40, der lediglich schematisch dargestellt ist. Die Darstellung des Verriegelungsmechanismus 40 dient der näheren Erläuterung von dessen Funktion. Diese Funktion kann jedoch auch durch eine Reihe anderer Ausgestaltungen eines verriegelungsmechanismus sichergestellt werden. Dem Fachmann ist es ohne weiteres möglich, anhand der nachfolgenden Beschreibung der Funktion bedarfsweise alternative Ausgestaltungen des Verriegelungsmechanismus auszuwählen und vorzusehen.

In der Fig. 6a ist der Verriegelungsmechanismus 40 in einer gelösten Stellung dargestellt. Der Hebel 46 des Verriegelungsmechanismus 40 befindet sich in einer unteren Stellung und das Federmittel 38 ist im Wesentlichen entspannt. Das Federmittel 38 verbindet das Kopfstück 32 der Trennwand 8 teleskopierbar mit dem Grundkörper 36 der Trennwand 8. Das Kopfstück 32 trägt ein oberes Dichtmittel 28, das an dem Dachpaneel 5 anliegt und für eine Abdichtung der beiden unterteilten Bereiche 16,17 des Kofferaufbaus 1 gegeneinander dient.

In der Fig. 6b ist der Verriegelungsmechanismus 40 in einer verriegelten Stellung dargestellt. Der Hebel 46 des Verriegelungsmechanismus 40 befindet sich nun in einer oberen Stellung, wobei der erste Arm 48 des Verriegelungsmechanismus 40 gegen den Grundkörper 36 angestellt ist und den Grundkörper 36 gegen die Federkraft des Federmittels 38 nach unten drückt. Dies führt im Ergebnis zu einer Verlängerung der gesamten Trennwand 8 in vertikaler Richtung. Durch eine entsprechende Anlagefläche 50 zwischen dem Grundkörper 36 der Trennwand 8 und dem ersten Arm 48 des Verriegelungsmechanismus 40 wird ein ungewolltes Verkürzen der Trennwand 8 infolge der Rückstellkraft des Federmittels 38 ohne einen entsprechenden Eingriff des Bedieners verhindert.

In dem in der Fig. 6b dargestellten und insoweit bevorzugten Ausführungsbeispiel befindet sich der zweite Arm 52 des

Verriegelungsmechanismus 40 in Anlage mit einer hierfür vorgesehenen Anlagefläche 54 am Dachpaneel 5. Dabei ist die Länge des zweiten Arms 52 derart in Bezug auf die Anordnung der Drehachse 56 des Verriegelungsmechanismus 40 gewählt, dass im verriegelten Zustand des Verriegelungsmechanismus 40 eine reibschlüssige Verbindung zwischen der Anlagefläche 54 und dem zweiten Arm 52 des Verriegelungsmechanismus 40 geschaffen wird. Diese reibschlüssige Verbindung zwischen Trennwand 8 und Dachpaneel 5 führt zusammen mit dem Eingreifen des unteren Randes 20 der Trennwand 8 in die im Bodenpaneel 6 eingelassene Nut 22 zu einer Sicherung der Trennwand 8 gegenüber einem unbeabsichtigten Verschieben in Querrichtung des Kofferaufbaus 1.

## Patentansprüche

1. Kofferaufbau (1) eines Lastkraftwagens (L), Aufliegers (A) und/oder Anhängers, mit einem Bodenpaneel (6), zwei Seitenwandpaneelen (4), einem Dachpaneel (5) und wenigstens einer Trennwand (8) zum Unterteilen des Kofferaufbaus (1), wobei wenigstens eine Vertiefung zur Aufnahme jedenfalls von wenigstens einem Vorsprung des unteren Rands (20) der Trennwand (8) in das Bodenpaneel (6) eingelassen ist,
**dadurch gekennzeichnet, dass** die Trennwand (8) in wenigstens einer quer zur Trennwand (8) verlaufenden am Dachpaneel (5) vorgesehenen Schiene (10) geführt ist.

2. Kofferaufbau nach Anspruch 1,
**dadurch gekennzeichnet, dass** wenigstens eine Nut (22) zur Aufnahme des unteren Rands (20) der Trennwand (8) in das Bodenpaneel (6) eingelassen ist.

3. Kofferaufbau nach Anspruch 1 oder 2,
**dadurch gekennzeichnet, dass** die Trennwand (8) zum Unterteilen des Kofferaufbaus (1) in Quererstreckung des Kofferaufbaus (1) ausgebildet ist und das wenigstens eine Reihe von Vertiefungen oder die wenigstens eine Nut (22) in Längserstreckung des Kofferaufbaus (1) verläuft.

4. Kofferaufbau nach Anspruch 1 bis 3,
**dadurch gekennzeichnet, dass** ein Verriegelungsmechanismus (40) zur Fixierung der Trennwand (8) am Dachpaneel (5) vorgesehen ist.

5. Kofferaufbau nach Anspruch 4,
**dadurch gekennzeichnet, dass** der Verriegelungsmechanismus (40) zur Festlegung der Trennwand (8) am Dachpaneel (5) in die wenigstens eine Schiene (10) am Dachpaneel (5) eingreift.

6. Kofferaufbau nach einem der Ansprüche 3 bis 5,
**dadurch gekennzeichnet, dass** die Trennwand (8) in der wenigstens einen Schiene (10) am Dachpaneel (5) pendelnd aufgehängt ist.

7. Kofferaufbau nach einem der Ansprüche 1 bis 6,
**dadurch gekennzeichnet, dass** die Trennwand (8) eine Einrichtung zum vertikalen Verlängern/Verkürzen der Trennwand (8) aufweist.

8. Kofferaufbau nach Anspruch 7,
**dadurch gekennzeichnet, dass** die Trennwand (8) wenigstens ein beim Verlängern der Trennwand (8) eine Rückstellkraft erzeugendes Federmittel (38) aufweist.

9. Kofferaufbau nach Anspruch 7 oder 8,
**dadurch gekennzeichnet, dass** die Trennwand (8) in vertikaler Richtung teleskopierbar ausgebildet ist.

10. Kofferaufbau nach einem der Ansprüche 1 bis 9,
**dadurch gekennzeichnet, dass** im Bodenpaneel (6) wenigstens eine in Längserstreckung des Kofferaufbaus (1) verlaufende zusätzliche Vertiefung, Reihe von Vertiefungen oder Nut (42,44) eingelassen ist.

11. Kofferaufbau nach Anspruch 10,
**dadurch gekennzeichnet, dass** die wenigstens eine zusätzliche Vertiefung oder wenigstens eine zusätzliche Nut (42) in unmittelbarer Nähe zu einer der Seitenwandpaneele (4) in das Bodenpaneel (6) eingelassen ist.

12. Kofferaufbau nach einem der Ansprüche 1 bis 11,
**dadurch gekennzeichnet, dass** die Trennwand (8) am unteren Ende ein in die wenigstens eine Vertiefung oder die wenigstens eine Nut (22,42,44) eingreifendes, unteres Dichtmittel (24) aufweist.

13. Kofferaufbau nach einem der Ansprüche 1 bis 12,
**dadurch gekennzeichnet, dass** die Trennwand (8) ein am Dachpaneel (5) anliegendes, sich entlang der Trennwand (8) ersteckendes oberes Dichtmittel (28) aufweist.

## Claims

1. Box body (1) of a lorry (L), semi-trailer (A) and/or trailer, having a floor panel (6), two side wall panels (4), a roof panel (5) and at least one partition wall (8) for dividing the box body (1), wherein at least one recess is embedded into the floor panel (6) for receiving in any event at least one projecting part of the lower edge (20) of the partition wall (8), **characterised in that** the partition wall (8) is guided in at least one bar (10) provided on the roof panel (5) and running transverse to the partition wall (8).

2. Box body according to Claim 1, **characterised in that** at least one groove (22) is embedded into the floor panel (6) for receiving the lower edge (20) of the partition wall (8).

3. Box body according to Claim 1 or 2, **characterised in that** the partition wall (8) for dividing the box body (1) is formed in transverse extension of the box body (1), and **in that** at least one row of recesses or the at least one groove (22) runs in longitudinal extension of the box body (1).

4. Box body according to any one of Claims 1 to 3, **characterised in that** a locking mechanism (40) is provided for fixing the partition wall (8) on the roof panel (5).

5. Box body according to Claim 4, **characterised in that** the locking mechanism (40) for fixing the partition wall (8) on the roof panel (5) engages with the at least one bar (10) on the roof panel (5).

6. Box body according to any one of Claims 3 to 5, **characterised in that** the partition wall (8) is oscillatingly suspended in the at least one bar (10) on the roof panel (5).

7. Box body according to any one of Claims 1 to 6, **characterised in that** the partition wall (8) has a device for vertically lengthening/shortening the partition wall (8).

8. Box body according to Claim 7, **characterised in that** the partition wall (8) has at least one spring means (38) producing a restoring force when the partition wall (8) is lengthened.

9. Box body according to Claim 7 or 8, **characterised in that** the partition wall (8) is designed to be telescopic in the vertical direction.

10. Box body according to any one of Claims 1 to 9, **characterised in that** at least one additional recess, row of recesses or groove (42, 44) running in longitudinal extension of the box body (1) is embedded in the floor panel (6).

11. Box body according to Claim 10, **characterised in that** at least one additional recess or at least one additional groove (42) is embedded into the floor panel (6) right next to one of the side wall panels (4).

12. Box body according to any one of Claims 1 to 11, **characterised in that** the partition wall (8) at the lower end has a lower sealant (24) engaging with the at least one recess or the at least one groove (22, 42, 44).

13. Box body according to any one of Claims 1 to 12, **characterised in that** the partition wall (8) has an upper sealant (28) abutting on the roof panel (5) and extending along the partition wall (8).

## Revendications

1. Structure de coffre (1) pour un camion (L), une semi-remorque (A) et / ou une remorque, qui est dotée d'un panneau, qui forme le plancher (6), de deux panneaux, qui forment les parois latérales (4), d'un panneau, qui forme le toit (5), et d' au moins une paroi de séparation (8) pour diviser ladite structure de coffre (1), sachant qu'au moins une cavité est pratiquée dans le plancher (6) pour recevoir, en tout cas, au moins une saillie du bord inférieur (20) de la paroi de séparation (8), **caractérisée en ce que** la paroi de séparation (8) est guidée dans au moins un rail (10), qui, s'étendant transversalement par rapport à ladite paroi de séparation (8), est prévu sur le panneau formant le toit (5).

2. Structure de coffre selon la revendication 1, **caractérisée en ce qu'**au moins une rainure (22) est pratiquée dans le plancher (6) pour la réception du bord inférieur (20) de la paroi de séparation (8).

3. Structure de coffre selon la revendication 1 ou 2, **caractérisée en ce que** la paroi de séparation (8), destinée à diviser la structure de coffre (1), s'étend au travers de ladite structure de coffre (1), et qu'au moins une rangée de cavités ou la rainure (22) au moins prévue s'étend le long de la structure de coffre (1).

4. Structure de coffre selon les revendications 1 à 3, **caractérisée en ce qu'**un mécanisme de verrouillage (40) est prévu pour la fixation de à paroi de séparation (8) au toit (5).

5. Structure de coffre selon la revendication 4, **caractérisée en ce que**, pour la fixation de la paroi de séparation (8) au toit (5), le mécanisme de verrouillage (40) s'engage dans le rail (10), au moins prévu sur le panneau formant le toit (5).

6. Structure de coffre selon l'une des revendications 3 à 5, **caractérisée en ce que** la paroi de séparation (8) est suspendue, flottante, dans le rail (10), au moins prévu sur le panneau formant le toit (5).

7. Structure de coffre selon l'une des revendications 1 à 6, **caractérisée en ce que** la paroi de séparation (8) est dotée d'un système d'allongement / de raccourcissement de ladite paroi de séparation (8).

8. Structure de coffre selon la revendication 7, **caractérisée en ce que** à paroi de séparation (8) est dotée d'au moins un moyen élastique (38), qui génère une force de rappel lors de l'allongement de la paroi de séparation (8).

9. Structure de coffre selon la revendication 7 ou 8, **caractérisée en ce que** la paroi de séparation (8) est conçue de sorte à pouvoir être télescopée dans la direction verticale.

10. Structure de coffre selon l'une des revendications 1 à 9, **caractérisée en ce que**, dans le plancher (6), est pratiquée au moins une cavité, une rangée de cavités ou une rainure (42, 44) supplémentaire, qui s'étend le long de la structure de coffre (1).

11. Structure de coffre selon la revendication 10, **caractérisée en ce que** la cavité supplémentaire, au moins prévue, ou au moins une rainure supplémentaire (42), est pratiquée dans le plancher (6), à proximité directe de l'une des parois latérales (4).

12. Structure de coffre selon l'une des revendications 1 à 11, **caractérisée en ce que** la paroi de séparation (8) est dotée, à l'extrémité inférieure, d'un moyen d'étanchéité (24) inférieur, qui s'engage dans la cavité au moins prévue ou dans au moins une rainure (22, 42, 44).

13. Structure de coffre selon l'une des revendications 1 à 12, **caractérisée en ce que** la paroi de séparation (8) est dotée d'un moyen d'étanchéité supérieur, qui, portant contre le toit (5), s'étend le long de la paroi de séparation (8).
